# EUROPÄISCHE PATENTSCHRIFT

(11) **EP 0 746 488 B1**
(45) Veröffentlichungstag und Bekanntmachung des Hinweises auf die Patenterteilung: **19.11.1997**
(21) Anmeldenummer: 95906253.0
(22) Anmeldetag: 20.01.1995
(51) Int. Cl.: B62B 1/12, B62B 1/00, B62B 1/14

(54) **TRANSPORTKARREN**
CONVEYING TROLLEY
CHARIOT TRANSPORTEUR

(30) Priorität: 04.03.1994 DE 4407243
(43) Veröffentlichungstag der Anmeldung: 11.12.1996
(73) Patentinhaber: SORTIMO INTERNATIONAL AUSRÜSTUNGSSYSTEME FÜR SERVICEFAHRZEUGE GmbH, D-86441 Zusmarshausen (DE)
(72) Erfinder: SCHMID, Michael, Joachim, D-86391 Stadtbergen (DE)
(74) Vertreter: Zipse + Habersack
(86) Internationale Anmeldenummer: DE9500072
(87) Internationale Veröffentlichungsnummer: WO9523719

(56) Entgegenhaltungen:
- DE-A- 3 712 915
- FR-A- 2 162 896
- US-A- 3 659 867
- US-A- 3 666 285
- US-A- 5 263 727

## Beschreibung

Die vorliegende Erfindung betrifft einen Transportkarren zum Transport von Gegenständen, z.B. Kisten oder Koffern.

Ein derartiger Transportkarren ist in der DE 41 39 604 A beschrieben. Der dort abgebildete Transportkarren hat in Seitenansicht ein L-förmiges Profil. An der Verbindungsstelle der beiden Schenkel des L sind Laufräder angeordnet. Am freien Ende des langen L-Schenkels ist ein Handgriff angeordnet, durch den sich der Transportkarren leicht bedienen läßt. Der kurze L-Schenkel dient als Auflagefläche für zu transportierende Kisten oder Koffer. Mit einem derartigen Transportkarren können derartige schwere Lasten bequem und einfach über mittlere Entfernungen transportiert werden. Ein Nachteil dieses bekannten Transportkarrens besteht darin, daß die Laufräder relativ klein sein müssen, damit der Transportkarren in einem Kraftfahrzeug-Kofferraum in der Weise verstaut werden kann, daß der lange L-Schenkel als Basisfläche dient. Zu diesem Zweck hat der bekannte Transportkarren einen Klemmbügel, der über eine Schiene an dem langen L-Schenkel axial verschieblich angeordnet ist. Die Koffer oder Kisten werden zwischen dem kurzen L-Schenkel und dem Klemmbügel festgeklemmt. Auf diese Weise sind die festgeklemmten Gegenstände im Kofferraum eines Fahrzeugs gegen Verrutschen gesichert. Die kleinen Laufräder erschweren die Verwendung des Transportkarrens auf unebenem Gelände deutlich.

Die beispielsweise aus FR-A-2 162 896, US-A-5 263 727 oder US-A-3 659 867 bekannte Lösung erlaubt es, die Laufräder des Transportkarrens größer auszubilden. Hierfür sind die Laufräder an dem Rahmen des langen L-Schenkels schwenkbar angelenkt. Sie können daher in eine platzsparende Transportstellung eingeklappt werden, in der sie im wesentlichen parallel zu dem langen L-Schenkel liegen, und in eine Betriebsstellung, in der sie parallel zueinander und mit ihrer Achse parallel zur Schnittlinie der beiden L-Schenkel angeordnet sind. In dieser Betriebsstellung sind die Laufräder durch eine Festlegeeinrichtung festlegbar. Die Laufräder sind über Radgabeln schwenkbar an dem langen L-Schenkel angelenkt. Liegt der Transportkarren mit eingeklappten Laufrädern auf einer Unterlage z. B. in einem Kraftfahrzeug-Kofferraum, so kommt es aufgrund vorstehender Kanten insbesondere im Achsbereich der Laufräder leicht zu Beschädigungen dieser Unterlage. Nachteilig ist auch, daß das Einladen des Transportkarrens mit eingeklappten Laufrädern schwierig zu bewerkstelligen ist.

Der Erfindung liegt die Aufgabe zugrunde, einen Transportkarren der genannten Art so weiterzubilden, daß sein Einladen z. B. in einen Kraftfahrzeug-Kofferraum vereinfacht ist. Nach der Erfindung sind zu diesem Zweck an der Unterseite der Radgabeln zusätzliche Rangierrollen angeordnet, die in Transportstellung der Radgabeln die gleiche Ausrichtung wie die Laufräder in Betriebsstellung haben. So kann der Transportkarren im fast liegenden Zustand, d. h. der lange L-Schenkel als Basis auf dem Kofferraumboden des Kraftfahrzeugs bewegt werden. In dem die Laufräder überdeckenden Nabenbereich weisen die Radgabeln an ihrer Außenseite vorzugsweise eine gummierte Bremsauflage auf, die in Transportstellung der Radgabeln nach unten d. h. zur Rückseite des langen L-Schenkels weisen. Wird der Transportkarren dann hingelegt, so liegt er auf den Bremsauflagen im Nabenbereich der Radnaben und auf dem zweckmäßig nach hinten gekröpften Griffbereich auf, der mit Evopren® umschäumt ist und somit ebenfalls die Lage des Transportwagens in dem Kraftfahrzeug stabilisiert.

Der Rahmen des Transportkarrens im Bereich des langen L-Schenkels ist vorzugsweise als O-Rahmen ausgebildet, d.h. er weist zwei seitliche Längsstreben und am freien Ende des langen L-Schenkels eine Querstrebe auf, die die beiden Längsstreben miteinander verbindet und als Griff dient. Diese Querstrebe ist durch eine Kröpfung der beiden Seitenstreben im Griffbereich nach hinten etwas nach hinten versetzt, so daß diese Querstrebe, wie oben bereits ausgedrückt, als Auflage für den Transportkarren in Transportstellung dient. In der Mitte des langen L-Schenkels, d.h. zwischen den beiden seitlichen Längsstreben, ist eine Spann- oder auch Führungsschiene angeordnet, die sich axial zum langen L-Schenkel erstreckt. Diese Schiene endet unten im Verbindungsbereich der beiden L-Schenkel und am freien Ende des langen L-Schenkels entweder in der Querstrebe, die den Griff bildet oder in einer etwas darunter angeordneten Querstrebe, so daß die den Griff bildende Querstrebe durch die Spannschiene nicht beeinträchtigt wird.

In dem Bereich zwischen der den Griff bildenden Querstrebe und der Querstrebe zur griffteilseitigen Befestigung der Spannschiene kann vorzugsweise eine Lenkrolle lösbar montierbar sein, so daß der Transportkarren mit dem langen L-Schenkel als Basis für die vollständige Lastaufnahme der mit dem Transportkarren transportierten Gepäckstücke verwendet werden kann. Diese Lenkrolle bildet dann mit den beiden Laufrädern in Betriebsstellung eine Rollebene, die in etwa parallel zur Ebene des langen L-Schenkels oder etwas geneigt dazu liegt.

Die Festlegeeinrichtung zur Festlegung der Laufräder oder Radgabeln in der Betriebsstellung ist vorzugsweise als Klappbügel ausgebildet, der zwischen die beiden Radgabeln geklappt wird, wenn sich diese in Betriebsstellung befinden. Die Radgabeln werden dann durch den Klappbügel gegen äußere Anschläge gespannt, die den Schwenkbereich der Laufräder nach außen begrenzen. Es kann jedoch auch vorgesehen sein, daß der Klapphebel formschlüssig in die beiden Radgabeln eingreift und somit die Radgabeln und damit die Laufräder sowohl nach innen als auch nach außen fixiert. In diesem Fall brauchen keine Anschläge vorgesehen sein, die den Schwenkbereich der Radgabeln begrenzen.

Der Klappbügel ist vorzugsweise in Form eines U ausgebildet, wobei die freien Enden der senkrechten Schenkel des U horizontal nach außen abgeknickt sind. Diese nach außen geknickten freien Enden sind in Schwenklagern um eine Achse parallel zur Verbindungslinie zwischen den beiden L-Schenkeln schwenkbar gehalten. Die Schwenklager sind um die seitlichen Längsstreben des langen L-Schenkels schwenkbar angelenkt.

In seiner eingeklappten Stellung liegt der Klappbügel im wesentlichen parallel zum langen L-Schenkel. In dieser Stellung sind die freien Enden vorzugsweise etwas nach hinten, d.h. in entgegengesetzter Richtung zum kleinen L-Schenkel gekröpft, und die Enden sind in Zwischenstücken gelagert, die in gleicher Weise wie die Radgabeln drehbar an den Längsstreben des langen L-Schenkels gelagert sind. Wenn der Klappbügel in diesem Fall als harter elastischer bzw. federnder Metallbügel ausgebildet ist, wird der Bügel durch diese leichte Kröpfung selbsttätig in seiner eingeklappten Stellung gehalten. Nach dem Ausklappen in seine Festlegestellung zwischen den beiden Radgabeln wird er ebenfalls durch die Eigenspannung des Klappbügels in dieser Position gehalten. Es müssen daher bei dieser sehr vorteilhaften, konstruktionstechnisch einfachen Ausführungsform der Erfindung keine Vorrichtungen vorgesehen werden, die den Klappbügel im ein- und ausgeklappten Zustand festlegen.

Vorzugsweise ist der an einer Spannschiene in axialer Richtung des langen L-Schenkels verschiebbare Klemmbügel durch einen Exzenter festlegbar. Die Gepäckstücke werden zwischen dem kurzen L-Schenkel und diesem Klemmbügel festgelegt, so daß sie weder in geneigter oder stehender Fahrstellung noch in liegender Transportstellung von dem Transportkarren wegrutschen können. Durch den Exzenterstellbügel läßt sich der Klemmbügel sehr einfach und rasch in eine neue Position bewegen und dort festlegen. Der Klemmbügel ist vorzugsweise mit einer gummierten Schicht versehen, die das Festlegen der Gepäckstücke aufgrund der erhöhten Friktion unterstützt.

Vorzugsweise sind auch die den Rahmen bildenden Längs- und Querstreben des langen L-Schenkels mit einer Evoprenschicht ummantelt. Hierdurch wird die Handhabbarkeit des Transportkarrens verbessert und die Stabilität des Transportkarrens in Transportstellung vergrößert. Auf diese Weise werden auch Kratzer im Kofferraum, hervorgerufen durch den Rahmen des liegenden Transportkarrens, vermieden.

Der Transportkarren ist aufgrund seiner konstruktionstechnisch einfachen Ausführung sehr robust und erlaubt den Transport schwerer Lasten auch über unebenes Gelände, da die Laufräder einen verglichen mit bekannten Transportkarren sehr großen Radius haben können.

Die Erfindung wird nachfolgend beispielsweise anhand der schematischen Zeichnung beschrieben. In dieser zeigen:
- Fig. 1: einen erfindungsgemäßen Transportkarren in Seitenansicht mit montierter Lenkrolle und
- Fig. 2: eine Vorderansicht II des Transportkarrens aus Fig. 1.

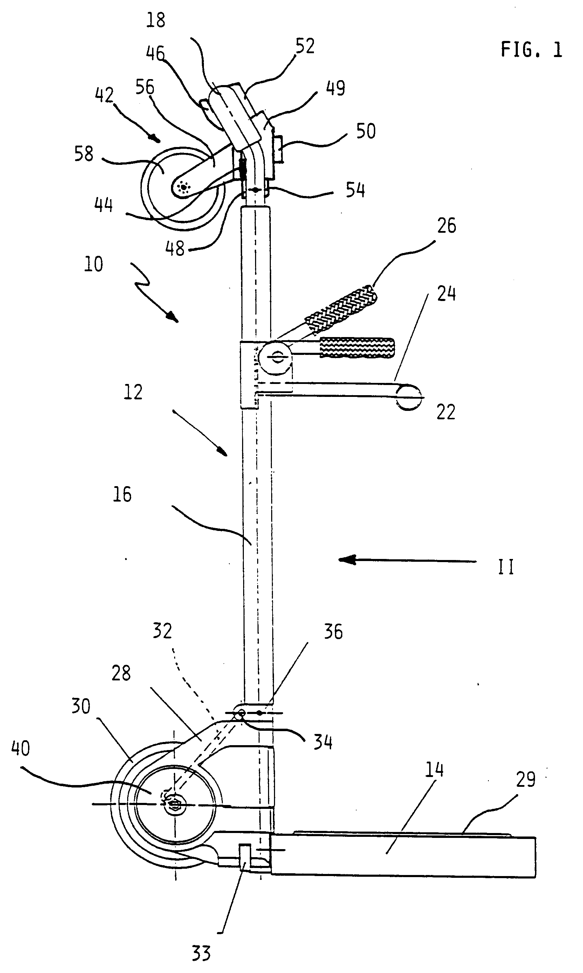

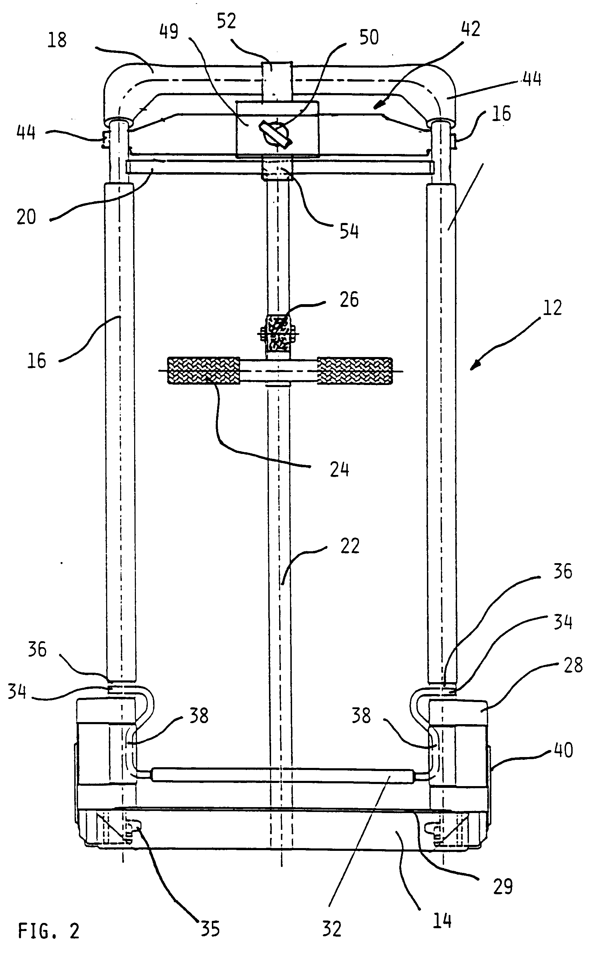

Der Transportkarren 10 wird nachfolgend anhand der Fig. 1 und 2 beschrieben. Er hat in der in Fig. 1 dargestellten Seitenansicht ein L-förmiges Profil, besteht also aus einem langen L-Schenkel 12 und einem kurzen L-Schenkel 14, die in einem Winkel von ungefähr 90° miteinander verbunden sind. Der lange L-Schenkel 12 besteht aus einem O-förmigen Rahmen, der aus zwei seitlichen Längsstreben 16 besteht, die an ihrem freien Ende über eine Querstrebe 18 miteinander verbunden sind. Diese Querstrebe 18 dient als Griff und ist wie die beiden Längsstreben 16 mit Evopren umschäumt. Parallel zu der den Griff bildenden Querstrebe 18 ist eine weitere Querstrebe 20 vorgesehen, die als äußere Befestigung für eine Führungsschiene 22 dient, an der ein Klemmbügel 24 verschiebbar gelagert und mittels eines Exzenterhebels 26 festlegbar ist. Durch den Klemmbügel 24 wird zu transportierendes Gepäck, z.B. Kisten oder Koffer, zwischen der gummierten Auflage 29 des kurzen L-Schenkels und dem Klemmbügel 24 eingespannt. An den beiden seitlichen Längsstreben 16 des langen L-Schenkels 12 sind im Verbindungsbereich der beiden L-Schenkel 12,14 Radgabeln 28 schwenkbar angelenkt. An diesen Radgabeln 28 sind die Laufräder 30 drehbar gelagert. Die Radgabeln 28 und damit auch die Laufräder 30 sind von der in den Fig. 1 und 2 dargestellten Betriebsstellung in eine nicht dargestellte Transportstellung einklappbar, in der sowohl die Radgabeln 28 als auch die Laufräder 30 parallel zu der durch den Rahmen 16,18 des langen L-Schenkel 12 aufgespannten Ebene liegen. An der Innenseite der Radgabel sind hierfür Sicherungszapfen 30 (Fig. 2) vorgesehen, die in Transportstellung der Radgabeln eine nicht dargestellte Strebe im Verbindungsbereich der beiden L-Schenkel 12,14 mit Friktionseingriff durchsetzen. Die Radgabeln 28 werden in der dargestellten Betriebsstellung durch einen Klappbügel 32 gehalten, der mit seinen freien Enden 34 in Zwischenstücken 36 gelagert ist, die wie die Radgabeln 28 drehbar an den beiden Längsstreben 16 des langen L-Schenkels 12 gelagert sind.

In der nicht dargestellten eingeklappten Stellung ist der Klappbügel 32 nach oben geklappt, so daß er in etwa parallel zur Ebene des langen L-Schenkels 12 liegt. In dieser Stellung sind die beiden freien Enden 34 des Klappbügels 32 etwas nach hinten, d.h. bezüglich Fig. 2 in die Zeichenebene hineingekröpft, so daß aufgrund der federelastischen Eigenschaften des Klappbügels 32 und der gelenkigen Lagerung der Zwischenstücke 36 der Klappbügel 32 selbsttätig in die eingeklappte als auch in die dargestellte ausgeklappte Stellung vorgespannt wird. In der dargestellten ausgeklappten Stellung sichert der Klappbügel 32 die Radgabeln 28 gegen eine Verschwenkung nach innen oder außen. Hierfür greifen die vertikalen Abschnitte 38 des Klappbügels 32 in nicht näher dargestellte Aufnahmen der Radgabeln ein. Gegen eine weitere Verschwenkung nach außen kann ein nicht dargestellter Anschlag vorgesehen sein, der eine über die dargestellte Betriebsstellung hinausgehende Verschwenkung der beiden Radgabeln 28 nach außen verhindert. In diesem Fall sichert der Klemmbügel 32 die Radgabeln 28 nur gegen eine Verschwenkung nach innen.

Wie ersichtlich ist, sind die Laufräder 30 sehr groß. In dem die Laufräder überdeckenden Radnabenbereich 40 der Radgabeln 28 ist ein gummierter Bremsbelag vorgesehen, der einen liegenden Transport des Transportkarrens in Transportstellung der Radgabeln 28 stabilisiert. Die beiden Längsstreben 16 des langen L-Schenkels 12 sind unterhalb des Griffbereichs etwas nach hinten gekröpft, so daß der Transportkarren bei einem liegenden Transport auf den Bremsauflagen 40 der Radgabeln 28 und dem nach hinten gekröpften Griff 18, der durch die Querstrebe des Rahmens des langen L-Schenkels 12 gebildet wird, stabilisiert. Optional läßt sich zwischen der den Griff 18 bildenden Querstrebe und der Querstrebe 20 zur Fixierung der Führungsschiene 22 zum freien Ende des langen L-Schenkels 12 hin eine Lenkrollenvorrichtung 42 montieren. Diese Lenkrollenvorrichtung wird von hinten gegen die Querstreben 18, 20 und die Längsstreben 16 angelegt. Hierfür weist die Lenkrollenvorrichtung 42 vier Tragabschnitte 44, 46, 48 auf, wobei die Tragabschnitte 44 die beiden Längsstreben 16 hintergreifen, der Tragabschnitt 46 den Griff 18 und der Tragabschnitt 48 die Querstrebe 20. Auf der Vorderseite des langen L-Schenkels 12, d.h. der in Richtung des kurzen L-Schenkels 14 weisenden Richtung hat die Lenkrollenvorrichtung 42 einen Schließmechanismus 49 mit einem Stellknopf 50, durch dessen Betätigung zwei Riegel 52, 54 ausgefahren werden können, die den Griff 18 bzw. die Querstrebe 20 übergreifen und damit die Lenkrollenvorrichtung 42 fest an dem griffteilseitigen Ende des Rahmens des langen L-Schenkels 12 festlegen. Die Lenkrollenvorrichtung 42 weist an der Rückseite des langen L-Schenkels, d.h. an der dem kurzen L-Schenkel 14 abgewandten Seite, eine senkrecht zur Ebene des Rahmens 16,18 des langen L-Schenkels drehbare Gabel 56 auf, an der die Lenkrolle 58 gelagert ist. Der Aufhängepunkt der Lenkrolle 58 an der Gabel 56 weicht von dem Drehpunkt der Gabel 56 an der Lenkrollenvorrichtung 42 in der Ebene des Rahmens 16, 18 des langen L-Schenkels 12 etwas ab, so daß die Lenkrolle 58 automatisch in die richtige Richtung nachläuft, d.h. mitlenkt. Im montierten Zustand wird der Transportkarren 10 zum Transportwagen, d.h. das gesamte Gewicht der Gepäckstücke wird von der Lenkrolle 58 und den Laufrädern 30 übernommen. Durch einfache Betätigung des Drehknopfes 50 werden über den Schließmechanismus 49 die Riegel 52,54 wieder zurückgezogen, so daß die Lenkrollenvorrichtung 42 nach hinten abgenommen werden kann.

An der Unterseite jeder Radgabel 28 ist eine Rangierrolle 33 drehbar um eine Achse parallel zur Ebene des kurzen L-Schenkels 14 und senkrecht zur Achse des Laufrades 30 gelagert. Diese Rangierrolle 33 hat in Transportstellung der Radgabeln 28 die gleiche Orientierung wie die Laufräder 30 in Betriebsstellung der Radgabeln 28. Die Rangierrollen 33 sind somit für den liegenden Transport des Transportkarrens 10 z.B. in einem Kraftfahrzeug gedacht. Durch leichtes Anheben des Handgriffes 18 kann der Transportkarren mit den in Transportstellung eingeklappten Radgabeln auf den Rangierrollen 33 leicht hin und her rangiert werden. Die Rangierrollen 33 sind sehr viel kleiner als die Laufräder 30 und nehmen daher bei einem Transport keinen zusätzlichen Platz weg. Diese Ausführungsform verknüpft somit die komfortable Handhabbarkeit des Transportkarrens 10 auf unebenem Gelände, bedingt durch den großen Durchmesser der Laufräder mit einer sehr guten Transportierbarkeit aufgrund der kompakten Abmessungen der eingeklappten Laufräder 30. Eine ausgezeichneten Rangierbarkeit des Transportkarrens auf ebenen Transportunterlagen, z.B. dem Kofferraum eines Kraftfahrzeugs ist trotz der eingeklappten Laufräder gegeben durch die kleinen Rangierrollen 33.

## Patentansprüche

1. Transportkarren, insb. zum Transport von Koffern und Kisten, mit einem in Seitenansicht L-förmigen Rahmen, mit einem Handgriff (18) am freien Ende des längeren L-Schenkels (12) und Laufrädern (3a) an der Knick- bzw. Verbindungsstelle der beiden L-Schenkel (12,14), wobei die Laufräder (30) in Radgabeln (28) gehalten sind, die um parallel zum längeren L-Schenkel (12) verlaufende Achsen (16) zwischen einer eingeklappten Transportstellung und einer ausgeklappten Betriebsstellung schwenkbar gelagert sind, und wobei eine Feststelleinrichtung (32,34,36) zur Festlegung der Radgabeln (28) zumindest in der Betriebsstellung vorgesehen ist,
dadurch **gekennzeichnet**,
daß an der Unterseite jeder Radgabel (28) eine im Vergleich zum Laufrad (30) kleine Rangierrolle (33) gelagert ist, deren Achse ungefähr in der Ebene der Auflagefläche des kürzeren L-Schenkels (14), jedoch quer zur Achse des zugehörigen Laufrades (30) liegt, wobei die Rangierrolle (33) die Orientierung des Laufrades (30) in Betriebsstellung hat, wenn die Radgabel (28) in die Transportstellung eingeschwenkt ist.

2. Transportkarren nach Anspruch 1,
dadurch **gekennzeichnet**,
daß die Feststelleinrichtung als Klappbügel (32) ausgebildet ist, der von einer eingeklappten Stellung parallel zum längeren L-Schenkel (12) in eine ausgeklappte Stellung klappbar ist, in der er zwischen den in Betriebsstellung ausgeschwenkten Radgabeln (28) eingespannt ist.

3. Transportkarren nach Anspruch 2,
dadurch **gekennzeichnet**,
daß der Klappbügel (32) in der Art eines U mit einem langen horizontalen Schenkel und vergleichsweise kurzen vertikalen Schenkeln (38) ausgebildet ist,
daß die freien Enden (34) der vertikalen Schenkel (38) nach außen abgeknickt sind, und
daß die nach außen weisenden abgeknickten freien Enden (34) in den Seitenbereichen des längeren L-Schenkels (12) um eine horizontale Achse schwenkbar gelagert sind.

4. Transportkarren nach Anspruch 3,
dadurch **gekennzeichnet**,
daß die freien Enden (34) des Klappbügels (32) in Zwischenstücken (36) gelagert sind, die an den Längsstreben (16) des längeren L-Schenkels (12) schwenkbar gelagert sind, und
daß die freien Enden (34) des Klappbügels (32) in eingeklappter Stellung quer zur Eben des Rahmens (16,18) des längeren L-Schenkels (12) in Richtung auf die Rückseite des Rahmens (16,18), d.h. auf die dem kürzeren L-Schenkel (14) gegenüberliegende Seite hin gekröpft sind.

5. Transportkarren nach einem der vorhergehenden Ansprüche,
dadurch **gekennzeichnet**,
daß der Weg der freien Schwenkbarkeit der Radgabeln (28) nach außen durch Anschläge begrenzt ist.

6. Transportkarren nach einem der vorhergehenden Ansprüche,
dadurch **gekennzeichnet**,
daß im äußeren Nabenbereich der Laufräder (30) ein gummierter Bremsbelag (40) angeordnet ist.

7. Transportkarren nach einem der vorhergehenden Ansprüche,
dadurch **gekennzeichnet**,
daß an der Innenseite der Radgabeln (28) Sicherungszapfen (35) parallel zur Radachse herausragen, die in Transportstellung der Radgabeln (28) in Aufnahmebuchsen zu liegen kommen, die im Knickbereich des L-förmigen Rahmens angeordnet sind.

8. Transportkarren nach einem der vorhergehenden Ansprüche,
dadurch **gekennzeichnet**,
daß an dem längeren L-Schenkel (12) ein im wesentlichen parallel zum kürzeren L-Schenkel (14) verlaufender Klemmbügel axial zum längeren L-Schenkel (12) verschieb- und festlegbar angeordnet ist.

9. Transportkarren nach einem der vorhergehenden Ansprüche,
dadurch **gekennzeichnet**,
daß der längere L-Schenkel (12) als O-förmiges Rahmenprofil mit zwei in Längsrichtung des Schenkels (12) verlaufenden, z.B. rohrförmigen, Längsstreben (16) ausgebildet ist, die an ihrem oberen Ende über eine als horizontales Griffrohr (18) ausgebildete Querstrebe, gegebenenfalls einstückig, miteinander verbunden sind, und
daß in der Mitte zwischen den zwei Längsstreben (16) und parallel dazu eine Führungsschiene (22) für einen Schlitten angeordnet ist, auf dem ein Klemmbügel (24) zur Festlegung von Transportgut gegen die Auflagefläche (29) des kürzeren L-Schenkels (14) angeordnet ist.

10. Transportkarren nach Anspruch 9,
dadurch **gekennzeichnet**,
daß der Schlitten über einen Exzenterklemmhebel (26) an der Führungsschiene (22) festlegbar ist.

11. Transportkarren nach Anspruch 9 oder 10,
dadurch **gekennzeichnet**,
daß die den Rahmen des längeren L-Schenkels (12) bildenden Längs- und Querstreben (16,18) umschäumt sind.

12. Transportkarren einem der Ansprüche 9 bis 11,
dadurch **gekennzeichnet,**
daß die Längsstreben (16) an ihrem oberen Ende kurz vor dem Übergang zum Griffrohr (18) nach hinten gekröpft sind.

13. Transportkarren nach einem der vorhergehenden Ansprüche,
dadurch **gekennzeichnet**,
daß an dem Rahmen (16,18) des längeren L-Schenkels (12) unterhalb des Griffbereichs (18) ein Aufnahmerahmen (16,18,20) für die lösbare Montage einer Lenkrollenvorrichtung (42) angeordnet ist, die zusammen mit den Laufrädern (30) eine Rollebene parallel oder Leicht geneigt zum längeren L-Schenkel (12) bildet.

## Claims

1. A transport trolley, especially for the transport of suitcases and boxes, with a frame, L-shaped in side view, with a handle (18) at the free end of the longer L-leg (12) and with running wheels (30) at the bending or connecting point of the two L-legs (12, 14), the running wheels (30) being held in wheel forks (28) which are mounted pivotably about axes (16), running parallel to the longer L-leg (12), between a swung-in transport position and a swung-out operating position, and a locking device (32, 34, 36) being provided for fixing the wheel forks (28) at least in the operating position, characterized in that there is mounted on the under-side of each wheel fork (28) a manoeuvring roller (33) which is small in comparison with the running wheel (30) and the axis of which lies approximately in the plane of the bearing surface of the shorter L-leg (14), but transversely relative to the axis of the associated running wheel (30), the manoeuvring roller (33) having the orientation of the running wheel (30) in the operating position when the wheel fork (28) is pivoted into the transport position.

2. A transport trolley according to claim 1, characterized in that the locking device is designed as a swing bar (32) which can be swung from a swung-in position parallel to the longer L-leg (12) into a swung-out position, in which it is clamped between the wheel forks (28) pivoted out in the operating position.

3. A transport trolley according to claim 2, characterized in that the swing bar (32) is designed in the manner of a U with a long horizontal leg and comparatively short vertical legs (38), in that the free ends (34) of the vertical legs (38) are bent outwards, and in that the bent free ends (34) facing outwards are mounted pivotably about a horizontal axis in the side regions of the longer L-leg (12).

4. A transport trolley according to claim 3, characterized in that the free ends (34) of the swing bar (32) are mounted in intermediate pieces (36) which are mounted pivotably on the longitudinal struts (16) of the longer L-leg (12), and in that, in the swung-in position, the free ends (34) of the swing bar (32) are cranked transversely relative to the plane of the frame (16, 18) of the longer L-leg (12) in the direction of the rear side of the frame (16, 18), that is to say towards the side located opposite the shorter L-leg (14).

5. A transport trolley according to any one of the preceding claims, characterized in that the travel of the free pivotability of the wheel forks (28) is limited outwards by stops.

6. A transport trolley according to any one of the preceding claims, characterized in that a rubberized brake lining (40) is arranged in the outer hub region of the running wheels (30).

7. A transport trolley according to any one of the preceding claims, characterized in that retaining pins (35) project parallel to the wheel axis on the inside of the wheel forks (28), and, when the wheel forks (28) are in the transport position, the said retaining pins come to rest in receiving bushes which are arranged in the bond region of the L-shaped frame.

8. A transport trolley according to any one of the preceding claims, characterized in that a clamping bar running essentially parallel to the shorter L-leg (14) is arranged on the longer L-leg (12) so as to be capable of being displaced axially and fixed relative to the longer L-leg (12).

9. A transport trolley according to any one of the preceding claims, characterized in that the longer L-leg (12) is designed as an O-shaped frame profile with two, for example, tubular longitudinal struts (16) which run in the longitudinal direction of the leg (12) and which are connected to one another, if desired in one piece, at their upper end via a transverse strut designed as a horizontal handle tube (18), and in that a guide rail (22) for a slide is arranged in the middle between the two longitudinal struts (16) and parallel thereto, a clamping bar (24) for fixing transported articles against the bearing surface (29) of the shorter L-leg (14) being arranged on the said slide.

10. A transport trolley according to claim 9, characterized in that the slide can be fixed to the guide rail (22) via an eccentric clamping lever (26).

11. A transport trolley according to either of claims 9 and 10, characterized in that the longitudinal and transverse struts (16, 18) forming the frame of the longer L-leg (12) are surrounded by foam.

12. A transport trolley according to any one of claims 9 to 11, characterized in that the longitudinal struts (16) are cranked rearwards at their upper end just in front of the transition to the handle tube (18).

13. A transport trolley according to any one of the preceding claims, characterized in that a receiving frame (16, 18, 20) for the releasable mounting of a steering roller device (42) is arranged on the frame (16, 18) of the longer L-leg (12) below the handle region (18), the said steering roller device forming, together with the running wheels (30), a rolling plane parallel to or slightly inclined relative to the longer L-leg (12).

## Revendications

1. Chariot de transport destiné notamment au transport de valises et de caisses, comportant un cadre en forme de L en vue latérale, une poignée (18) sur l'extrémité libre de la branche longue (12) du L, et des roues de roulement (3a) au niveau du point d'inflexion ou de liaison des deux branches (12, 14) du L, les roues de roulement (30) étant maintenues dans des fourches (28) de roues qui sont montées de façon à pouvoir pivoter autour d'axes (16), qui s'étendent parallèlement à la branche longue (12) du L, entre une position de transport repliée et une position de service sortie, et un dispositif de blocage (32, 34, 36) étant prévu pour bloquer les fourches (28) de roues, au moins dans la position de service,
caractérisé en ce que,
une roulette de manoeuvre (33) plus petite que la roue de roulement (30) est montée sur la face inférieure de chaque fourche (28) de roue, dont l'axe est situé approximativement dans le plan de la surface de dépose de la branche courte (14) du L mais transversalement à l'axe de la roue de roulement (30) associée, étant précisé que lorsque la fourche (28) de roue est repliée, la roulette de manoeuvre (33) a la même orientation que la roue de roulement (30) en position de service.

2. Chariot de transport selon la revendication 1,
caractérisé en ce que,
le dispositif de blocage est réalisé sous la forme d'un étrier rabattable (32), qui peut être rabattu d'une position rabattue parallèle à la branche longue (12) du L dans une position sortie, dans laquelle il est enserré entre les fourches (28) de roues pivotées en position de service.

3. Chariot de transport selon la revendication 2,
caractérisé en ce que,
l'étrier rabattable (32) est réalisé sous la forme d'un U avec une branche horizontale longue, et des branches verticales (38) relativement courtes,
les extrémités libres (34) des branches verticales (38) sont coudées vers l'extérieur, et
en ce que les extrémités libres (34) coudées orientées vers l'extérieur sont montées de façon à pouvoir pivoter autour d'un axe vertical dans les zones latérales de la branche longue (12) du L.

4. Chariot de transport selon la revendication 3,
caractérisé en ce que,
les extrémités libres (34) de l'étrier rabattable (32) sont logées dans des pièces intermédiaires (36), qui sont montées de façon à pouvoir pivoter sur les entretoises longitudinales (16) de la branche longue (12) du L, et
en ce qu'en position rabattue les extrémités libres (34) de l'étrier rabattable (32) sont coudées transversalement au plan du cadre (16, 18) de la branche longue (12) du L en direction de la face arrière du cadre (16, 18), à savoir du côté opposé à la branche courte (14) du L.

5. Chariot de transport selon l'une quelconque des revendications précédentes,
caractérisé en ce que,
la plage de pivotement libre des fourches (28) de roues est limitée vers l'extérieur par des butées.

6. Chariot de transport selon l'une quelconque des revendications précédentes,
caractérisé en ce que,
une garniture de frein caoutchoutée (40) est disposée dans la zone extérieure des moyeux des roues de roulement (30).

7. Chariot de transport selon l'une quelconque des revendications précédentes,
caractérisé en ce que,
des tenons de sécurité (35) dépassent de la face interne des fourches (28) de roues parallèlement à l'axe de la roue qui, en position de transport des fourches (28) de roues, sont situés dans des douilles de logement disposées dans la zone d'inflexion du cadre en forme de L.

8. Chariot de transport selon l'une quelconque des revendications précédentes,
caractérisé en ce que,
un étrier rabattable est disposé sur la branche longue (12) du L, qui s'étend pour l'essentiel parallèlement à la branche courte (14) du L, qui peut être déplacé axialement et bloqué par rapport à la branche longue (12) du L.

9. Chariot de transport selon l'une quelconque des revendications précédentes,
caractérisé en ce que,
la branche longue (12) du L est agencée en tant que profil de cadre en forme de O et comporte deux entretoises longitudinales (16), par exemple de forme tubulaire, qui s'étendent dans la direction longitudinale de la branche (12), qui sont reliées entre elles au niveau de leur extrémité supérieure, le cas échéant d'un seul tenant, par l'intermédiaire d'une entretoise transversale agencée en tant que tube de préhension (18) horizontale, et
en ce qu'un rail de guidage (22) destiné à un coulisseau est disposé au milieu entre les deux entretoises longitudinales (16) et parallèlement à ces dernières, sur lequel est disposé un étrier de blocage (24) pour bloquer le matériel transporté contre la surface de dépose (29) de la branche courte (14) du L.

10. Chariot de transport selon la revendication 9,
caractérisé en ce que,
le coulisseau peut être bloqué sur le rail de guidage (22) par l'intermédiaire d'un levier d'excentrique (26).

11. Chariot de transport selon la revendication 9 ou 10,
caractérisé en ce que,
les entretoises longitudinales et transversales (16, 18) formant le cadre de la branche longue (12) du L sont revêtues de mousse.

12. Chariot de transport selon l'une des revendications 9 à 11,
caractérisé en ce que,
les extrémités supérieures des entretoises longitudinales (16) sont coudées vers l'arrière juste avant la transition vers le tube de préhension (18).

13. Chariot de transport selon l'une quelconque des revendications précédentes,
caractérisé en ce que,
un cadre de montage (16, 18, 20) est disposé sur le cadre (16, 18) de la branche longue (12) du L sous la zone de la poignée (18), lequel est destiné au montage amovible d'un dispositif (42) à roulette directrice, et qui forme avec les roues de roulement (30) un plan de roulement parallèle ou légèrement incliné par rapport à la branche longue (12) du L.
